# EUROPÄISCHE PATENTSCHRIFT

(11) **EP 0 361 062 B1**
(45) Veröffentlichungstag und Bekanntmachung des Hinweises auf die Patenterteilung: **10.03.1993**
(21) Anmeldenummer: 89115262.1
(22) Anmeldetag: 18.08.1989
(51) Int. Cl.: G01N 27/447

(54) **Verfahren und Vorrichtung zum elektrophoretischen Trennen, Reinigen und Anreichern von geladenen oder polarisierbaren Makromolekülen**
Method and apparatus for electrophoretically separating, cleaning and enriching charged or polarizable macromolecules
Procédé et appareil pour séparer, nettoyer et enrichir électrophorétiquement des macro-molécules chargées ou polarisables

(30) Priorität: 27.08.1988 DE 3829111
(43) Veröffentlichungstag der Anmeldung: 04.04.1990
(73) Patentinhaber: HOECHST AKTIENGESELLSCHAFT, 65926 Frankfurt am Main (DE)
(72) Erfinder: Müllner, Stefan, Dr., D-6230 Frankfurt am Main 80 (DE)

(56) Entgegenhaltungen:
- US-A- 3 519 549
- US-A- 4 181 594
- US-A- 4 289 596
- US-A- 4 315 812
- US-A- 4 375 401
- US-A- 4 545 888

## Beschreibung

Gegenstand der Erfindung ist ein Verfahren zum elektrophoretischen Trennen, Reinigen und Anreichern von geladenen oder polarisierbaren Makromolekülen aus einem Gemisch dieser Moleküle in einer Trennsäule mit einem Platten- oder Stabgel als Trägermaterial.

Gegenstand der Erfindung ist ferner eine Vorrichtung zum Durchführen des Verfahrens.

Die Trennung und Analyse von geladenen Makromolekülen mit elektrophoretischen Methoden ist bekannt, z.B. die Sodiumdodecylsulfat (SDS)-Polyacrylamidgel-Elektrophorese von Proteinen, die denaturierende Polyacrylamidelektrophorese von DNA (Desoxyribonukleinsäure) in Gegenwart von Harnstoff sowie die Elektrophorese von Proteinen wie z.B. Immunglobuline und von DNA/RNA in Agarosegel. Zum direkten Quantifizieren dieser Makromoleküle sind verschiedene spezifische Färbemethoden und die radioaktive Isotopenmarkierung sowie die Autoradiographie bekannt. Die Rückgewinnung der zu untersuchenden Makromolekülsorten ist, wenn überhaupt möglich, zeitraubend und nur in kleinen Mengen möglich. Proteine z.B. müssen zuerst unter denaturierenden Bedingungen sichtbar gemacht, aus dem Gel ausgeschnitten und eluiert werden, was mit erheblichen Ausbeuteverlusten einhergeht.

Der Erfindung liegt demnach die Aufgabe zugrunde, ein Verfahren und eine Vorrichtung zu schaffen, mit dem bzw. mit der sich elektrophoretisch getrennte Makromoleküle quantitativ, d.h. ohne Ausbeuteverluste gewinnen lassen.

Die Erfindung löst die Aufgabe dadurch, daß man bei dem Verfahren der eingangs genannten Art mit Hilfe des Elektrophoresestromes die im Trägermaterial getrennt vorliegenden Makromoleküle aus dem Trägermaterial herauswandern läßt, über einen Moleküldetektor und eine Verteileinrichtung einem Mehrelektrodensammler zuführt und die einzelnen Elektroden des Mehrelektrodensammlers individuell nach Maßgabe eines aus dem Moleküldetektor kommenden Signals aktiviert.

In einer Ausgestaltung des Verfahrens kann man die Makromoleküle im Mehrelektrodensammler gegen eine semipermeable Wand laufen lassen.

Bei der Vorrichtung zur Durchführung des Verfahrens mündet eine Leitung, die die die Trennsäule mit dem Trägermaterial enthaltende Trenneinheit verläßt, über einen Moleküldetektor in eine Verteileinheit, die ihrerseits über Leitungen mit einem Multielektrodensammler verbunden ist; jeder Leitung im Multielektrodensammler ist eine Elektrode zugeordnet, die nach Maßgabe des Detektorsignals schaltbar ist. Die Gegenelektrode ist im Eingang der Trenneinheit angeordnet. Im Multielektrodensammler kann eine semipermeable Wand angeordnet sein.

Das Verfahren und die Vorrichtung gestatten in einfacher Weise, die im Trägermaterial getrennt vorliegenden Komponenten quantitativ, d.h. ohne Ausbeuteverluste zu gewinnen. Es ist lediglich ein an das jeweilige Problem angepaßter Detektor für die individuelle Lenkung des Stromflusses in der Verteileinheit erforderlich. Mit Hilfe der semipermeablen Wand können die Komponenten im Elektrolyten konzentriert werden. Bevorzugte Anwendung findet dieses Verfahren bei der Trennung nicht wasserlöslicher Proteine, z.B. bei Glykoproteinen, Membranproteinen, Lipoproteinen und Fusionsproteinen. Die Trennung ist effizient und schonend. Das Verfahren ist jedoch nicht auf die Trennung von Proteinen beschränkt, sondern eignet sich gleichermaßen zum Trennen anderer geladener oder stark polarisierbarer Makromoleküle wie z.B. DNA, RNA, Antikörper usw.

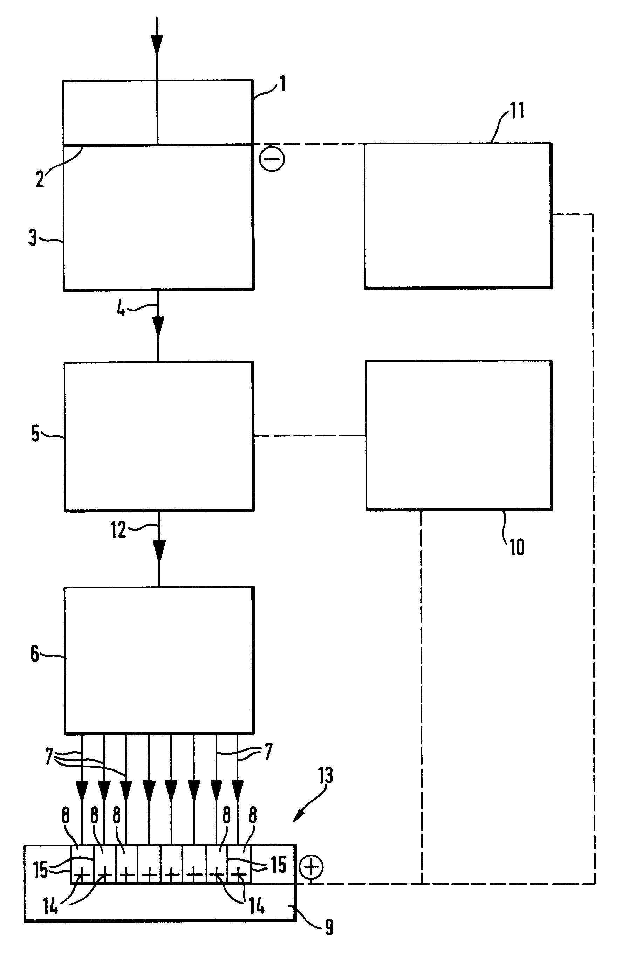

Im folgenden wird das Verfahren anhand der Figur, die ein Fließschema zeigt, näher erläutert.

Der Trenneinheit, bestehend aus einem Elektrolyt(Puffer)reservoir 1 mit Gegenelektrode 2 und einer Trennsäule 3 aus Glas oder Kunststoff wird ein Proteingemisch aus Phosphorylase B, Rinderserum Albumin, Ovalbumin, Carboanhydrase, Trypsininhibitor aus Sojabohne und Lysozym aus Hühnereiweiß zugeführt und elektrophoretisch zu scharfen diskreten Banden der einzelnen Proteine aufgetrennt. Die Trennsäule 3 ist mit einem Trägermaterial aus einem hydrophilen, nieder- bis hochpolymeren Trennmedium wie Acrylamid/N,N′-Methylen-bis-acrylamidcopolymer verschiedener Konzentration und Porengröße oder Agarose gefüllt. Die in der Trennsäule 3 aufgetrennten Proteine gelangen durch eine Art trägerfreie Elektrophorese über eine mit Elektrolyt gefüllte Leitung 4 in einen Moleküldetektor 5, der z.B. aus einem UV-Vis-Detektor mit Mikromeßzelle und angeschlossenem Schreiber und/oder Integrator oder Datenauswertestation 10 bestehen kann. Fluoreszenzdetektoren oder Radioaktivitätsdetektoren eignen sich ebenfalls als Moleküldetektor. Die im Moleküldetektor 5 detektierten Proteine gelangen über Leitung 12 in eine Verteileinheit 6, die über Leitungen 7 mit einzelnen Gefäßen 8 eines Mehrelektrodensammlers 13 verbunden ist. In den Gefäßen 8 können semipermeable Wände 15 wie Dialysemembrane angeordnet sein, sie können jedoch auch aus solchen Wänden begrenzt werden. Die einzelnen Gefäße 8 sind in einem Elektrolyt(Puffer)reservoir 9 angeordnet und jeweils mit einer Elektrode 14 versehen. Die Elektroden 14 werden nach Maßgabe des entsprechend aufgearbeiteten Moleküldetektorsignals geschaltet, womit gewährleistet wird, daß in ein einzelnes Gefäß 8 nur ein ganz bestimmtes Protein gelangt, und dort konzentriert wird. Das Elektrolyt(Puffer)reservoir soll die Erschöpfung des Elektrolyts verhindern. Um die Proteine von der semipermeablen Wand abzulösen, kann der Stromfluß in der Vorrichtung kurzzeitig umgepolt werden. Das Netzteil für die Stromversorgung ist mit 11 gekennzeichnet.

## Patentansprüche

1. Verfahren zum elektrophoretischen Trennen, Reinigen und Anreichern von geladenen oder polarisierbaren Makromolekülen aus einem Gemisch dieser Moleküle in einer Trennsäule (3) mit einem Platten- oder Stabgel als Trägermaterial, dadurch gekennzeichnet, daß man mit Hilfe des Elektrophoresestromes die im Trägermaterial getrennt vorliegenden Makromoleküle aus dem Trägermaterial herauswandern läßt, über einen Moleküldetektor (5) und eine Verteileinrichtung (6) einem Mehrelektrodensammler (13) zuführt und die einzelnen Elektroden des Mehrelektrodensammlers individuell nach Maßgabe eines aus dem Moleküldetektor (5) kommenden Signals aktiviert.

2. Verfahren nach Anspruch 1, dadurch gekennzeichnet, daß man die Makromoleküle im Mehrelektrodensammler (13) gegen eine semipermeable Wand laufen läßt.

3. Vorrichtung zum Durchführen des Verfahrens nach Anspruch 1, dadurch gekennzeichnet, daß eine Leitung (4) vorhanden ist, die eine die Trennsäule (3) mit dem Trägermaterial enthaltende Trenneinheit verläßt, und diese Leitung (4) über einen Moleküldetektor (5) in eine Verteileinheit (6) mündet, die ihrerseits über Leitungen (7) mit einem Mehrelektrodensammler (13) verbunden ist, jeder Leitung (7) im Multielektrodensammler (13) eine Elektrode (14) zugeordnet ist, die nach Maßgabe des Detektorsignals schaltbar ist, und eine Gegenelektrode (2) im Eingang der Trenneinheit angeordnet ist.

4. Vorrichtung nach Anspruch 3, dadurch gekennzeichnet, daß der Multielektrodensammler aus in einem Elektrolytreservoir (9) angeordneten einzelnen Gefäßen (8) besteht, die durch semipermeable Wände (15) begrenzt werden.

## Claims

1. A process for the electrophoretic separation, purification and concentration of charged or polarizable macromolecules from a mixture of these molecules in a separation column (3) with a slab or bar gel as the support, which comprises the macromolecules separated in the support causing to migrate out of the support by means of the electrophoretic current, feeding them into a multielectrode collector (13) via a molecule detector (5) and a distributor (6), and activating each of the electrodes of the multielectrode collector individually in accordance with a signal coming from the molecule detector (5).

2. The process as claimed in claim 1, wherein the macromolecules are made to move towards a semi-permeable wall in the multielectrode collector (13).

3. A device for carrying out the process as claimed in claim 1, wherein a line (4) is present which leaves the separation column (3) having the separation unit containing the support, and said line (4) leads via a molecule detector (5) into a distributor (6), which in turn is linked via lines (7) to a multielectrode collector (13), an electrode (14), which can be switched in accordance with the detector signal, is associated with each line (7) in the multielectrode collector (13), and a counterelectrode (2) is arranged in the inlet of the separation unit.

4. The device as claimed in claim 3, wherein the multielectrode collector consists of individual containers (8) arranged in an electrolyte reservoir (9), the said containers being bounded by semipermeable walls (15).

## Revendications

1. Procédé de séparation, de nettoyage et d'enrichissement électrophorétiques de macromolécules chargées ou polarisables à partir d'un mélange de ces molécules dans une colonne de séparation (3) avec comme matériau de support un gel en forme de plaque ou de barre, caractérisé en ce qu'à l'aide du courant électrophorétique on peut faire sortir du matériau de support les macromolécules présentes à l'état séparé dans ce matériau de support, les envoyer par l'intermédiaire d'un détecteur de molécules (5) et d'un dispositif de répartition (6) à un collecteur (13) à électrodes multiples et activer individuellement les différentes électrodes du collecteur à électrodes multiples en fonction d'un signal délivré par le détecteur de molécules (5).

2. Procédé selon la revendication 1, caractérisé en ce qu'on fait circuler les macromolécules contre une paroi semi-perméable, dans le collecteur (13) à électrodes multiples.

3. Dispositif pour la mise en oeuvre du procédé selon la revendication 1, caractérisé en ce qu'il est prévu une canalisation (4) qui part d'une unité de séparation contenant la colonne de séparation (3) pourvue du matériau de support, et que cette canalisation (4) débouche par l'intermédiaire d'un détecteur de molécules (5) dans une unité de répartition (6) qui pour sa part est raccordée par des canalisations (7) à un collecteur (13) à électrodes multiples, qu'à chaque canalisation (7) est associée, dans le collecteur (13) à électrodes multiples, une électrode (14) qui peut être commutée en fonction du signal du détecteur, et qu'une contre-électrode (2) est disposée à l'entrée de l'unité de séparation.

4. Dispositif selon la revendication 3, caractérisé en ce que le collecteur à électrodes multiples est constitué par des récipients individuels (8), qui sont disposés dans un réservoir d'électrolyte (9) et sont limités par des parois semi-perméables (15).
